(19) Europäisches Patentamt
European Patent Office
Office européen des brevets

(11) **EP 4 589 388 B1**

(12) **EUROPEAN PATENT SPECIFICATION**

(45) Date of publication and mention
of the grant of the patent:
**05.08.2026  Bulletin 2026/32**

(51) International Patent Classification (IPC):
***G03G 15/16*** *(2006.01)*    ***G03G 5/147*** *(2006.01)*

(52) Cooperative Patent Classification (CPC):
**G03G 15/162; G03G 15/1685**

(21) Application number: **24219857.0**

(22) Date of filing: **13.12.2024**

(54) **ELECTROPHOTOGRAPHIC MEMBER, TRANSFER DEVICE, AND IMAGE FORMING APPARATUS**

ELEKTROPHOTOGRAPHISCHES ELEMENT, ÜBERTRAGUNGSVORRICHTUNG UND BILDERZEUGUNGSVORRICHTUNG

ÉLÉMENT ÉLECTROPHOTOGRAPHIQUE, DISPOSITIF DE TRANSFERT ET APPAREIL DE FORMATION D'IMAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **19.01.2024   JP 2024006865**

(43) Date of publication of application:
**23.07.2025   Bulletin 2025/30**

(73) Proprietor: **FUJIFILM Business Innovation Corp.**
**Minato-ku**
**Tokyo (JP)**

(72) Inventors:
• **ONO, Masato**
**Ebina-shi, Kanagawa (JP)**
• **NISHIMURA, Iori**
**Ebina-shi, Kanagawa (JP)**
• **OMORI, Kenji**
**Ebina-shi, Kanagawa (JP)**
• **KIMURA, Jun**
**Ebina-shi, Kanagawa (JP)**
• **SEKO, Masayuki**
**Ebina-shi, Kanagawa (JP)**

(74) Representative: **Kurig, Thomas**
**Becker Kurig & Partner**
**Patentanwälte mbB**
**Bavariastraße 7**
**80336 München (DE)**

(56) References cited:
**WO-A1-2012/058178     US-B2- 9 442 431**

**Description**

BACKGROUND OF THE INVENTION

(i) Field of the Invention

The present invention relates to an electrophotographic member, a transfer device, and an image forming apparatus.

(ii) Description of Related Art

In an image forming apparatus (such as a copy machine, a facsimile machine, and a printer) using an electrophotographic method, a toner image formed on a surface of an image holder is transferred to an electrophotographic member and fixed to a recording medium to form an image.

As the electrophotographic member in the image forming apparatus, "an intermediate transfer belt having good transferability and less warping by using a bifunctional or lower functional alkoxysilane in a trifunctional or tetrafunctional alkoxysilane together with a limited amount of a filler" has been disclosed (JP2020-56928A).

WO 2012/058178 A1 discloses an intermediate transfer member, an image apparatus comprising the same and a method using the same.

SUMMARY OF THE INVENTION

Independent claim 1 defines an electrophotographic member including among other features a surface layer and an elastic layer.

Examples useful to understand the present disclosure:

<1> According to a first aspect of the present disclosure, there is provided an electrophotographic member including a surface layer, and an elastic layer, in which the surface layer includes a silicone compound, and in a case where a dynamic friction coefficient of the surface layer is denoted by (A) and a dynamic friction coefficient of the surface layer after subjecting the surface layer to a corona treatment at a current of 100 $\mu$A, a temperature of 22°C, a relative humidity of 55% RH, and a total discharge power of 0.72 kW is denoted by (B) in accordance with JIS K7125: 1999, (A) is 0.15 or more and 0.35 or less, and (B - A) is 0.05 or less.

<2> According to a second aspect of the present disclosure, there is provided the electrophotographic member according to the first aspect, in which the silicone compound may include a compound having Structure A represented by Formula: $[RSiO_{1.5}]_n$ (provided that in the formula, R represents an organic group and n represents an integer of 2 or more), and at least one R among a plurality of R's present in Structure A may be a group including an alkyl group.

<3> According to a third aspect of the present disclosure, there is provided the electrophotographic member according to the first or second aspect, in which a surface free energy of the surface layer may be 45 mJ/m$^2$ or less.

<4> According to a fourth aspect of the present disclosure, there is provided the electrophotographic member according to any one of the first to third aspects, in which a content of the silicone compound may be 3% by volume or more and 60% by volume or less with respect to the surface layer.

<5> According to a fifth aspect of the present disclosure, there is provided the electrophotographic member according to the fourth aspect, in which the content of the silicone compound may be 10% by volume or more and 40% by volume or less with respect to the surface layer.

<6> According to a sixth aspect of the present disclosure, there is provided the electrophotographic member according to any one of the first to fifth aspects, in which a volume-average particle diameter of the silicone compound may be 2.5 $\mu$m or less.

<7> According to a seventh aspect of the present disclosure, there is provided the electrophotographic member according to the sixth aspect, in which the volume-average particle diameter of the silicone compound may be 1 $\mu$m or less.

<8> According to an eighth aspect of the present disclosure, there is provided the electrophotographic member according to any one of the first to seventh aspects, in which the surface layer may include a urethane resin as a binder resin.

<9> According to a ninth aspect of the present disclosure, there is provided a transfer device including the electrophotographic member according to any one of the first to eighth aspects.

<10> According to a tenth aspect of the present disclosure, there is provided an image forming apparatus including an image holder, a charging device that charges a surface of the image holder, an electrostatic latent image forming device that forms an electrostatic latent image on the charged surface of the image holder, a developing device that accommodates a developer including a toner and develops the electrostatic latent image formed on the surface of the image holder with the developer to form a toner image, the transfer device according to the ninth aspect that transfers the toner image onto a surface of a recording medium, and a fixing device that fixes the toner image on the surface of the recording medium.

According to <1>, there is provided the electrophotographic member having high maintainability of cleanability, as compared with a case of an electrophotographic member including a surface layer and an elastic layer, in which the surface layer includes a silicone compound, and in a case where a dynamic friction coefficient of the surface layer is denoted by (A) and a dynamic friction coefficient of the surface layer after subjecting the surface layer to a corona treatment at a current of 100 $\mu$A, a temperature of 22°C, a relative humidity of 55% RH, and a total discharge power of 0.72 kW is denoted by (B) in accordance with JIS K7125: 1999, (A) is less than 0.15 or more than 0.30, or (B - A) is more than 0.05.

According to <2>, there is provided the electrophotographic member having high maintainability of cleanability, as compared with a case where the silicone compound is polydimethylsiloxane (PDMS).

According to <3>, there is provided the electrophotographic member having high maintainability of cleanability, as compared with a case where the surface free energy of the surface layer is more than 45 mJ/m$^2$.

According to <4>, there is provided the electrophotographic member having high maintainability of cleanability, as compared with a case where the content of the silicone compound is less than 3% by volume or more than 60% by volume with respect to the surface layer.

According to <5>, there is provided the electrophotographic member having high maintainability of cleanability, as compared with a case where the content of the silicone compound is less than 10% by volume or more than 40% by volume with respect to the surface layer.

According to <6>, there is provided the electrophotographic member having high maintainability of cleanability, as compared with a case where the volume-average particle diameter of the silicone compound is more than 2.5 $\mu$m.

According to <7>, there is provided the electrophotographic member having high maintainability of cleanability, as compared with a case where the volume-average particle diameter of the silicone compound is more than 1 $\mu$m.

According to <8>, there is provided the electrophotographic member having high maintainability of cleanability, as compared to with a case where the binder resin of the surface layer is a polyimide resin.

According to <9> and <10>, there are provided the transfer device and the image forming apparatus, having high maintainability of cleanability, as compared with a case of applying an electrophotographic member including a surface layer and an elastic layer, in which the surface layer includes a silicone compound, and in a case where a dynamic friction coefficient of the surface layer is denoted by (A) and a dynamic friction coefficient of the surface layer after subjecting the surface layer to a corona treatment at a current of 100 $\mu$A, a temperature of 22°C, a relative humidity of 55% RH, and a total discharge power of 0.72 kW is denoted by (B) in accordance with JIS K7125: 1999, (A) is less than 0.15 or more than 0.30, or (B - A) is more than 0.05.

## BRIEF DESCRIPTION OF THE DRAWINGS

Exemplary embodiment(s) of the present invention will be described in detail based on the following figures, wherein:

Fig. 1 is a schematic configuration view showing an example of an image forming apparatus of the present disclosure; and
Fig. 2 is a schematic configuration view showing the vicinity of a secondary transfer section in another example of the image forming apparatus of the present disclosure.

## DETAILED DESCRIPTION OF THE INVENTION

The exemplary embodiments of the present disclosure will be described below. The description and Examples are merely illustrative of the exemplary embodiments, and do not limit the scope of the exemplary embodiments of the present disclosure.

In the present specification, the term "step" includes not only an independent step but a step that is not clearly distinguished from other steps as long as the intended purpose of the step is achieved.

In the present specification, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present specification, each component may include a plurality of corresponding substances. In the present specification, in a case of referring to the amount of each component in the composition, the amount refers to a total amount of the substances that are present in the composition.

In the present specification, the "dynamic friction coefficient (A)" means a dynamic friction coefficient of a surface layer before a corona treatment in accordance with JIS K7125: 1999, in a transfer member including the surface layer and an elastic layer, in which the surface layer includes a silicone compound.

<Electrophotographic Member>

The electrophotographic member of the present disclosure includes among other features a surface layer and an elastic layer, in which the surface layer includes a silicone compound, and in a case where a dynamic friction coefficient of the surface layer is denoted by (A) and a dynamic friction coefficient of the surface layer after subjecting the surface layer to a corona treatment at a current of 100 $\mu$A, a temperature of 22°C, a relative humidity of 55% RH, and a total discharge power of 0.72 kW, in accordance with JIS K7125: 1999, is denoted by (B), (A) is 0.15 or more and 0.35 or less, and (B - A) is 0.05 or less.

With the configuration, the electrophotographic member of the present disclosure is an electrophotographic member having high maintainability of cleanability. A reason thereof is presumed as follows.

In recent years, due to the increasing awareness of sustainable development goals (SDGs), the developments of materials that reduce environmental burden have been in progress. As one of the developments, there is a technique of blending a silicone compound as a release agent into a surface layer of an electrophotographic member.

However, although an electrophotographic member having a surface layer including a silicone compound as a release agent has low frictional properties at the initial stage of use, an Si-O bond present in the surface layer may be silanolized by discharge energy due to repeated application of a voltage during the transfer, and the dynamic friction coefficient may be increased, leading to a decrease in cleanability.

In contrast, it is presumed that the electrophotographic member of the present disclosure satisfies the above-described dynamic friction coefficients (A) and (B), and thus, the maintainability of cleanability is high.

Hereinafter, the details of the electrophotographic member of the present disclosure will be described.

The electrophotographic member of the present disclosure may be in a roll shape or a belt shape, and examples of the electrophotographic member of the present disclosure include a configuration in which the elastic layer and the surface layer are provided on a conductive substrate.

- Surface Layer -

The surface layer includes a silicone compound. Specifically, for example, the surface layer includes a silicone compound and a binder resin.

It is preferable that the silicone compound include, for example, a compound having Structure A represented by Formula: $[RSiO_{1.5}]_n$ (provided that in the formula, R represents an organic group, and n represents an integer of 2 or more), and at least one R among a plurality of R's present in Structure A is a group including an alkyl group.

In Structure A, examples of the organic group represented by R in the formula include a hydroxyl group, a siloxy group, a hydrocarbon group, a hydrocarbon group in which one or a plurality of methylene groups are substituted with a carbonyl group, a hydrocarbon group in which one or a plurality of carbon atoms are substituted with a heteroatom (an oxygen atom, a nitrogen atom, or a sulfur atom), or a group formed by a combination of these groups.

Examples of the siloxy group described as the organic group represented by R include a monoalkylsiloxy group, a dialkylsiloxy group, and a trialkylsiloxy group, the dialkylsiloxy group or the trialkylsiloxy group is preferable, and the trialkylsiloxy group is more preferable.

Examples of the hydrocarbon group described as the organic group represented by R include an aliphatic hydrocarbon group and an aromatic hydrocarbon group.

Examples of the aliphatic hydrocarbon group include a linear, branched, or alicyclic saturated aliphatic hydrocarbon group, and a linear, branched, or alicyclic unsaturated aliphatic hydrocarbon group.

As the aliphatic hydrocarbon group, for example, a hydrocarbon group having 1 or more and 20 or less carbon atoms is preferable, and a hydrocarbon group having 1 or more and 15 or less carbon atoms is more preferable.

The aliphatic hydrocarbon group may be substituted with a substituent such as a halogen atom, a hydroxyl group, an amino group, and an aryl group.

Examples of the aromatic hydrocarbon group include a hydrocarbon group having 6 or more and 18 or less carbon atoms (for example, preferably having 6 or more and 14 or less carbon atoms). Examples of the aromatic hydrocarbon group include a phenyl group, a naphthyl group, and an anthracenyl group.

The aromatic hydrocarbon group may be substituted with a substituent such as a halogen atom, a hydroxyl group, an amino group, an alkyl group, and an alkoxy group.

The organic group represented by R may have a reactive group. Examples of the reactive group include a vinyl group, an allyl group, a styryl group, a maleimide group, an epoxy group, and a (meth)acryloyl group.

The plurality of R's present in Structure A may be the same organic group or different organic groups.

It should be noted that at least one R among the plurality of R's present in Structure A is, a group including an alkyl group, and from the viewpoint of improving the maintainability of cleanability, the alkyl group is more preferably an alkyl group having 1 or more and 9 or less carbon atoms, still more preferably an alkyl group having 1 or more and 4 or less carbon atoms, and particularly preferably an alkyl group having 1 carbon atom (that is, a methyl group).

Furthermore, examples of the silicone compound include a polymer compound called silsesquioxane, which has various skeleton structures.

The silsesquioxane may have any of amorphous, ladder, and cage skeleton structures, but from the viewpoint of setting a surface free energy of the surface layer in a range of 45 mJ/m$^2$ or less, and improving the maintainability of cleanability, a cage-like $T_8$ type silsesquioxane can be exemplified. Due to the rigid structure, even in a case where a voltage is repeatedly applied during the transfer, the silanol group is unlikely to be generated and an increase in dynamic friction coefficient is suppressed, whereby the maintainability of cleanability is easily improved.

In addition, in Structure A, n in the formula represents an integer of 2 or more, but from the viewpoint of improving the maintainability of cleanability, for example, n preferably represents an integer of 8 or more, and more preferably represents an integer of 8 or more and 10,000 or less.

From the viewpoint of improving the maintainability of cleanability, the content of the silicone compound is, for example, preferably 3% by volume or more, more preferably 6% by volume or more, and still more preferably 10% by volume or more with respect to the surface layer.

It should be noted that from the viewpoint of the bending resistance of the electrophotographic member, the upper limit of the content of the silicone compound is, for example, preferably 60% by volume or less, more preferably 50% by volume or less, and still more preferably 40% by volume or less with respect to the surface layer.

In addition, the volume-average particle diameter of the silicone compound is, for example, preferably 0.1 μm or more and 10 μm or less, more preferably 0.5 μm or more and 5 μm or less, and still more preferably 1 μm or more and 2.5 μm or less. In particular, the volume-average particle diameter of the silicone compound is 2.5 μm or less and more preferably 1 μm or less.

By setting the volume-average particle diameter of the silicone compound in the range, the silicone compound is easily dispersed in the surface layer in a state close to uniformity, the dynamic friction coefficient of the surface layer is reduced, the increase in the dynamic friction coefficient of the surface layer is easily suppressed, and the maintainability of cleanability is easily improved.

The volume-average particle diameter of the silicone compound is measured as follows.

A sample is collected from the surface layer of the electrophotographic member. The sample is a sample having a cut surface along the thickness direction of the surface layer as an observation surface.

The observation surface of the sample is observed with a scanning electron microscope to capture an image. In the image, the area of each primary particle of the silicone compound is measured by image analysis, and a circle-equivalent diameter thereof is calculated from this area value. The calculation of the circle-equivalent diameter is carried out for 100 silicone compounds. Then, a 50% diameter (D50v) in the volume-based cumulative frequency of the obtained circle-equivalent diameters is defined as the volume-average particle diameter of the silicone compound.

Examples of the binder resin include a polyamide resin, a polyurethane resin, a polyvinylidene fluoride resin, a tetrafluoroethylene copolymer resin, a polyester resin, a polyimide resin, a silicone resin, an acrylic resin, a polyvinyl butyral resin, an ethylene tetrafluoroethylene copolymer resin, a melamine resin, a fluororubber, an epoxy resin, a polycarbonate resin, a polyvinyl alcohol resin, a cellulose resin, a polyvinylidene chloride resin, a polyvinyl chloride resin, a polyethylene resin, and an ethylene vinyl acetate copolymer resin.

In particular, from the viewpoint of maintaining the cleanability, for example, a urethane resin is preferably included as the binder resin. The urethane resin may be an acrylic urethane resin, a polyester polyurethane resin, a polyether polyurethane resin, or the like. Among these, from the viewpoint of maintaining the cleanability, as the urethane resin, for example, a silicone-modified urethane resin is preferable, and a silicone-modified acrylic urethane resin is more preferable.

The content of the binder resin is an amount at which the binder resin serves as a main component of the surface layer. Here, the amount of the main component of the surface layer means an amount of the component that is present in the largest amount among the components included in the surface layer excluding the silicone compound.

The surface layer may also include an additive, and the additive can be appropriately selected from known additives such as a conductive agent, a reinforcing agent, an antioxidant, a surfactant, and a heat aging inhibitor, depending on various uses of the electrophotographic member.

The content of the additive with respect to the surface layer is, for example, preferably 30% by mass or less, more preferably 20% by mass or less, and still more preferably 10% by mass or less.

The dynamic friction coefficient of the surface layer is measured in accordance with JIS K7125: 1999.

In the electrophotographic member of the present disclosure, in a case where a dynamic friction coefficient of the surface layer is denoted as (A) and a dynamic friction coefficient of the surface layer after the surface layer is subjected to a corona treatment at a current of 100 $\mu$A, a temperature of 22°C, a relative humidity of 55% RH, and a total discharge power of 0.72 kW is denoted as (B) in accordance with JIS K7125: 1999, (A) is, for example, 0.15 or more and 0.35 or less, and more preferably 0.22 or more and 0.25 or less. In addition, (B - A) is 0.05 or less, and for example, more preferably 0.01 or less.

In addition, from the viewpoint of improving the maintainability of cleanability, the surface free energy of the surface layer is, for example, preferably 45 mJ/m$^2$ or less, more preferably 42 mJ/m$^2$ or less, and still more preferably 38 mJ/m$^2$.

The surface free energy of the surface layer is measured by the following method.

Based on an Owens-Wendt-Rabel-Kaelble (OWRK) method, water, diiodomethane, and N-dodecane, in which the surface free energy is known, are used, water is dropped onto the electrophotographic member to measure a contact angle of the water, diiodomethane is dropped onto the electrophotographic member to measure a contact angle of the diiodomethane, N-dodecane is dropped onto the electrophotographic member to measure a contact angle of the N-dodecane, and the surface free energy (mJ/m$^2$) is calculated.

In order to set the surface free energy to 45 mJ/m$^2$ or less, for example, the silicone compound includes a compound having Structure A, and in Structure A, the number of carbon atoms in the alkyl group is preferably 1 or more and 4 or less.

The thickness of the surface layer is not particularly limited and may be appropriately selected depending on the use. The thickness may be, for example, 0.1 $\mu$m or more and 30 $\mu$m or less.

- Elastic Layer -

The elastic layer is not particularly limited as long as the elastic layer includes an elastic material. Examples of the elastic material include isoprene rubber, chloroprene rubber, epichlorohydrin rubber, butyl rubber, silicone rubber, fluororubber, styrene-butadiene rubber, butadiene rubber, nitrile rubber, ethylene propylene rubber, epichlorohydrin-ethylene oxide copolymer rubber, epichlorohydrin-ethylene oxide-allyl glycidyl ether ternary copolymer rubber, ethylene-propylene-diene ternary copolymer rubber (EPDM), acrylonitrile-butadiene copolymer rubber (NBR), polyurethane rubber, natural rubber, and rubber obtained by mixing the above substances.

From the viewpoint of improving the conductivity, it is preferable that the elastic layer includes a conductive agent, and examples of the conductive agent include carbon black such as Ketjen black and acetylene black; thermal decomposition carbon, graphite; metals or alloys such as aluminum, copper, nickel, and stainless steel; conductive metal oxides such as tin oxide, indium oxide, titanium oxide, tin oxide-antimony oxide solid solution, and tin oxide-indium oxide solid solution; and powders of substances obtained by subjecting the surface of an insulating material to a conductive treatment.

The conductive agents may be used alone or in combination of two or more kinds thereof.

Examples of other additives include known materials that can be added to the elastic body, such as a softener, a plasticizer, a curing agent, a vulcanizing agent, a vulcanizing accelerator, an antioxidant, a surfactant, a coupling agent, and a filler (such as silica or calcium carbonate).

The elastic layer may be a foamed body (hereinafter also referred to as an "elastic foamed body") containing an elastic material. In order to obtain the elastic foamed body, a foaming agent, a foam stabilizer, a catalyst, or the like may be used, as necessary. Examples of the foaming agent include water; an azo compound such as azodicarbonamide, azobisisobutyronitrile, and diazoaminobenzene; benzenesulfonyl hydrazides such as benzenesulfonyl hydrazide, 4,4'-oxybisbenzenesulfonylhydrazide, and toluenesulfonyl hydrazide; bicarbonate such as sodium hydrogencarbonate that generates carbon dioxide by pyrolysis; a mixture of $NaNO_2$ and $NH_4Cl$ that generates a nitrogen gas; and a peroxide that generates oxygen.

The volume resistance value of the elastic layer during the application of a voltage of 10 V is, for example, preferably $10^9 \, \Omega$ or less, more preferably $10^1 \, \Omega$ or more and $10^9 \, \Omega$ or less, and still more preferably $10^2 \, \Omega$ or more and $10^8 \, \Omega$ or less.

Furthermore, the volume resistance value of the elastic layer is measured as follows.

The electrophotographic member is placed on a metal plate such as a copper plate with a load of 500 g on each of both end parts of the electrophotographic member, a voltage (V) of 10 V (in the case of the elastic layer) is applied between a conductive support member of the electrophotographic member and the metal plate, using a microcurrent measuring device (R8320 manufactured by Advantest Corporation), and a current value I (A) after 5 seconds is read to perform calculation with the following expression, thereby determining the volume resistance value. Furthermore, the measurement is performed under an environment of a temperature of 22°C and a relative humidity of 55% RH.

$$\text{Expression: Volume resistance value Rv } (\Omega) = V/I$$

The thickness of the elastic layer is not particularly limited and may be appropriately selected depending on the use. For example, the thickness may be 5 mm or more and 500 mm or less.

The length of the elastic layer in the axial direction is not particularly limited and may be appropriately selected depending on the use. For example, the thickness may be 5 mm or more and 500 mm or less.

The width of the elastic layer is not particularly limited and may be appropriately selected depending on the use. For example, the thickness may be 5 mm or more and 500 mm or less.

The method of forming the elastic layer is not particularly limited and a known method is used.

In a case of an elastic foamed body, examples of the method include a method of preparing a composition containing an elastic material, a foaming agent, and other components (for example, a vulcanizing agent), extrusion-molding the composition into a cylindrical shape, and then heating the molded article to perform vulcanization and foaming, and a method of cutting out a large foamed body into a cylindrical shape. In addition, after a columnar elastic foamed body is formed, a center hole for inserting the support member may be formed to obtain the cylindrical elastic foamed body. Furthermore, after the cylindrical elastic foamed body is obtained, the shape may be further adjusted or subjected to a post-treatment such as surface polishing, as necessary.

- Conductive Substrate -

The conductive substrate is selected depending on the shape (that is, a roll shape or a belt shape) of the electrophotographic member.

The conductive substrate functions as an electrode and a support member, and examples of the material therefor include metals such as iron (cutting steel and the like), copper, brass, stainless steel, aluminum, and nickel. Examples of the conductive substrate also include a member (a resin member, a ceramic member, and the like) having an outer peripheral surface that has been subjected to a plating treatment, and a member (a rubber member, a resin member, a ceramic member, and the like) in which a conductive agent is dispersed. The conductive substrate may be a belt-shaped member, a hollow member (cylindrical member), or a non-hollow member.

<Transfer Device>

The transfer device of the present disclosure includes the electrophotographic member of the present disclosure as a transfer member. By including the electrophotographic member of the present disclosure, a transfer device having high maintainability of cleanability is obtained.

The transfer device of the present disclosure may be a transfer device including an intermediate transfer body consisting of the electrophotographic member of the present disclosure, in which a toner image is transferred to the surface, a primary transfer device that primarily transfer of the toner image to a surface of the intermediate transfer body, and a secondary transfer device that secondarily transfers the toner image transferred to the surface of the intermediate transfer body to a surface of a recording medium.

In addition, the transfer device of the present disclosure may include an intermediate transfer body, in which a toner image is transferred on the surface, a primary transfer device that primarily transfers the toner image to a surface of the intermediate transfer body, the primary transfer device having a primary transfer member consisting of the electrophotographic member of the present disclosure, and a secondary transfer device that secondarily transfers the toner image transferred to the surface of the intermediate transfer body to a surface of a recording medium.

In addition, the transfer device of the present disclosure may include an intermediate transfer body, in which a toner image is transferred to the surface, a primary transfer device that primarily transfers the toner image to a surface of the intermediate transfer body, and a secondary transfer device that secondarily transfers the toner image transferred to the surface of the intermediate transfer body to a surface of a recording medium, the secondary transfer device consisting of a secondary transfer member formed of the electrophotographic member of the present disclosure.

That is, the electrophotographic member of the present disclosure may be applied to any of the intermediate transfer body, the primary transfer member, or the secondary transfer member.

<Image Forming Apparatus>

The image forming apparatus of the present disclosure includes an image holder, a charging device that charges a surface of the image holder, an electrostatic latent image forming device that forms an electrostatic latent image on the charged surface of the image holder, a developing device that contains a developer including a toner and develops the electrostatic latent image formed on the surface of the image holder with the developer to form a toner image, the transfer device of the present disclosure, which transfers the toner image to a surface of a recording medium, and the fixing device that fixes the toner image to the surface of the recording medium.

Hereinafter, an image forming apparatus of the present disclosure will be described with reference to the drawings.

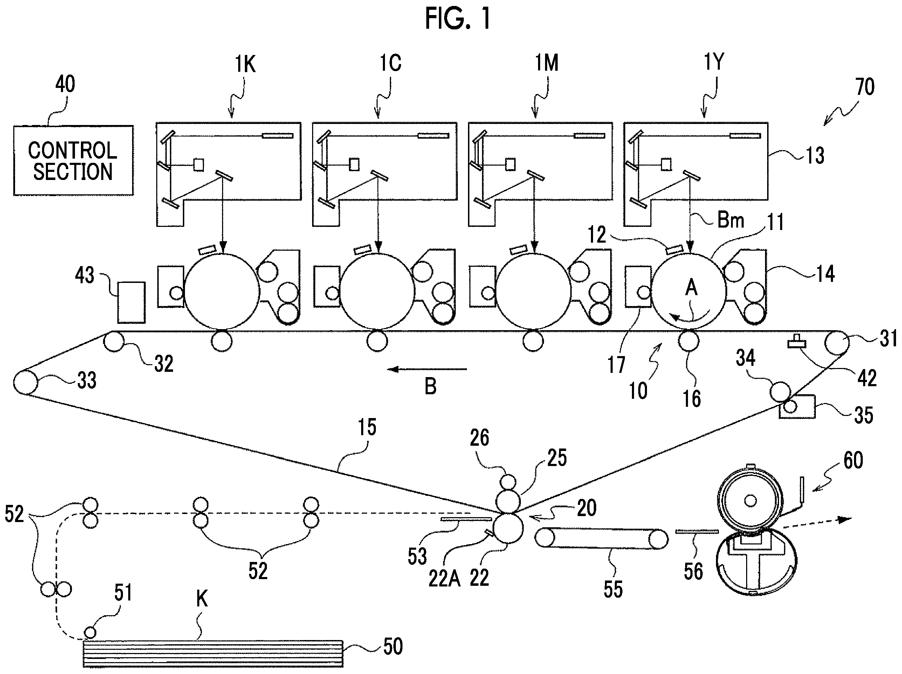

Fig. 1 is a schematic configuration view showing a configuration of the image forming apparatus of the present disclosure.

As shown in Fig. 1, an image forming apparatus 70 of the present disclosure is, for example, an intermediate transfer-type image forming apparatus that is generally called a tandem type, and includes a plurality of image forming units 1Y, 1M, 1C, and 1K (an example of a toner image forming device) in which a toner image of each color component is formed by an electrophotographic method, a primary transfer section 10 that performs sequential transfer (primary transfer) of the toner image of each color component formed by each of the image forming units 1Y, 1M, 1C, and 1K to an intermediate transfer belt 15, a secondary transfer section 20 that transfers in a batch (secondarily transfers) the overlapped toner images transferred to the intermediate transfer belt 15 to paper K as a recording medium, and a fixing device 60 that fixes the secondarily transferred image on the paper K. In addition, the image forming apparatus 70 includes a control section 40 that controls the operation of each device (each section).

Each of the image forming units 1Y, 1M, 1C, and 1K of the image forming apparatus 70 includes a photoreceptor 11 that holds the toner image formed on the surface thereof and rotates in the direction of an arrow A.

Around the photoreceptor 11, a charger 12 that charges the photoreceptor 11 is provided as an example of a charging unit, and a laser exposure machine 13 that draws an electrostatic lament image on the photoreceptor 11 is provided (in the figure, the exposure beam is represented by a mark Bm) as an example of a latent image forming unit.

In addition, around the photoreceptor 11, a developer 14 that accommodates a toner of each color component and makes the electrostatic latent image on the photoreceptor 11 into a visible image by using the toner is provided as an example of a developing unit, and a primary transfer roll 16 that transfers a toner image of each color component formed on the photoreceptor 11 to the intermediate transfer belt 15 by the primary transfer section 10 is provided.

Around the photoreceptor 11, a photoreceptor cleaner 17 that removes the residual toner on the photoreceptor 11 is provided, and devices for electrophotography of the charger 12, the laser exposure machine 13, the developer 14, the primary transfer roll 16, and the photoreceptor cleaner 17 are sequentially disposed along the rotation direction of the photoreceptor 11. These image forming units 1Y, 1M, 1C, and 1K are substantially linearly arranged in order of yellow (Y), magenta (M), cyan (C), and black (K) from the upstream side of the intermediate transfer belt 15.

The intermediate transfer belt 15, which is an example of the intermediate transfer body, is formed so that the volume resistance is, for example, $1 \times 10^6 \, \Omega \cdot cm$ or more and $1 \times 10^{14} \, \Omega \cdot cm$ or less, and is configured so that the thickness is, for example, about 0.1 mm.

By various rolls, the intermediate transfer belt 15 is driven to circulate (rotate) in the direction B shown in Fig. 1 at a speed fit for the purpose. The image forming apparatus 100 has, as the various rolls, a driving roll 31 that is driven by a motor (not shown in the drawing) excellent in maintaining a constant speed and rotates the intermediate transfer belt 15, a support roll 32 that supports the intermediate transfer belt 15 substantially linearly extending along an arrangement direction of each of the photoreceptors 11, a tension applying roll 33 that applies tension to the intermediate transfer belt 15 and functions as a correcting roll preventing meandering of the intermediate transfer belt 15, a back roll 25 that is provided in the secondary transfer section 20, and a cleaning back roll 34 that is provided in a cleaning section that scraps off the residual toner on the intermediate transfer belt 15.

The primary transfer section 10 is configured with a primary transfer roll 16, which is arranged to face the photoreceptor 11 with the intermediate transfer belt 15 therebetween. Furthermore, the primary transfer roll 16 is arranged to be pressed against the photoreceptor 11 with the intermediate transfer belt 15 therebetween, and a voltage with a polarity (primary transfer bias) opposite to the charging polarity (negative polarity, the same applies hereafter) of the toner is applied to the primary transfer roll 16. As a result, the toner image on each photoreceptor 11 is sequentially electrostatically sucked onto the intermediate transfer belt 15, which leads to formation of an overlapped toner image on the intermediate transfer belt 15.

The secondary transfer section 20 is configured to include the back roll 25 and a secondary transfer roll 22 that is arranged on a toner image-holding surface side of the intermediate transfer belt 15.

The back roll 25 is formed so that a surface resistivity thereof is $1 \times 10^7 \, \Omega/\square$ or more and $1 \times 10^{10} \, \Omega/\square$ or less, and a hardness thereof is set to, for example, 70° (ASKER C: manufactured by Kobunshi Keiki Co., Ltd., the same shall apply hereinafter). The back roll 25 is arranged on the back surface side of the intermediate transfer belt 15 to configure a counter electrode of the secondary transfer roll 22, and a power supply roll 26 made of a metal, to which the secondary transfer bias is stably applied, is arranged to come into contact therewith.

On the other hand, the secondary transfer roll 22 is a cylindrical roll having a volume resistance of $10^{7.5} \, \Omega \cdot cm$ or more and $10^{8.5} \, \Omega \cdot cm$ or less. Furthermore, the secondary transfer roll 22 is arranged to be pressed on the back roll 25 with the intermediate transfer belt 15 therebetween. The secondary transfer roll 22 is grounded so that the secondary transfer bias is formed between the secondary transfer roll 22 and the back roll 25, and the toner image is secondarily transferred to the paper K transported to the secondary transfer section 20.

Moreover, an intermediate transfer belt-cleaning member 35 that removes the residual toner or paper powder on the intermediate transfer belt 15 remaining after the secondary transfer, and cleans the surface of the intermediate transfer belt 15 is provided in a freely detachable manner on the downstream side of the secondary transfer section 20 of the intermediate transfer belt 15.

In addition, a secondary transfer roll-cleaning member 22A that removes the residual toner or paper powder on the secondary transfer roll 22 remaining after the secondary transfer, and cleans the surface of the intermediate transfer belt 15 is provided on the downstream side of the secondary transfer section 20 of the secondary transfer roll 22. Examples of the secondary transfer roll-cleaning member 22A include a cleaning blade. It should be noted that the secondary transfer roll-cleaning member 22A may be a cleaning roll.

Furthermore, the intermediate transfer belt 15, the primary transfer roll 16, and the secondary transfer roll 22 correspond to an example of a transfer device.

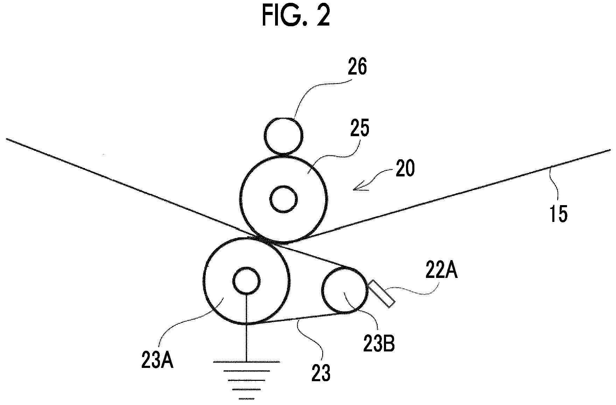

Here, the image forming apparatus 70 may be configured to include a secondary transfer belt instead of the secondary transfer roll 22. Specifically, as shown in Fig. 2, the image forming apparatus 70 may include a secondary transfer device including a secondary transfer belt 23, a driving roll 23A that is arranged to face the back roll 25 via the secondary transfer belt 23 and the intermediate transfer belt 15, and an idler roll 23B that allows the secondary transfer belt 23 to be stretched thereon in cooperation with the driving roll 23A.

On the other hand, a reference sensor (home position sensor) 42 that generates a reference signal to be a reference for taking the image forming timing in each of the image forming units 1Y, 1M, 1C, and 1K is disposed on the upstream side of the yellow image forming unit 1Y. In addition, an image density sensor 43 for adjusting image quality is disposed on the downstream side of the black image forming unit 1K. The reference sensor 42 recognizes a mark provided on the back side of the intermediate transfer belt 15 and generates a reference signal. Each of the image forming units 1Y, 1M, 1C, and 1K is configured to start to form an image according to an instruction from the control section 40 based on the recognition of the reference signal.

Furthermore, the image forming apparatus of the present disclosure includes, as a transport unit that transports the paper K, a paper storing section 50 that stores the paper K, a paper feeding roll 51 that takes out and transports the paper K stacked in the paper storing section 50 at a predetermined timing, a transport roll 52 that transports the paper K transported by the paper feeding roll 51, a transport guide 53 that sends the paper K transported by the transport roll 52 to the secondary transfer section 20, a transport belt 55 that transports the paper K transported after the secondary transfer by the secondary transfer roll 22 to the fixing device 60, and a fixing inlet guide 56 that guides the paper K to the fixing device 60.

Next, a basic image creating process of the image forming apparatus of the present disclosure will be described.

In the image forming apparatus of the present disclosure, image data output from an image reading device not shown in the drawing, a personal computer (PC) not shown in the drawing, or the like is subjected to image processing by an image processing device not shown in the drawing, and then an image creating operation is carried out by the image forming units 1Y, 1M, 1C, and 1K.

In the image processing device, the input image data are subjected to image processing, such as shading correction, misregistration correction, brightness/color space conversion, gamma correction, or various image editing works such as frame erasing or color editing and movement editing. The image data to which the image processing has been subjected are converted into color material gradation data of 4 colors, Y, M, C, and K, and output to the laser exposure machine 13.

In the laser exposure machine 13, for example, the photoreceptor 11 of each of the image forming units 1Y, 1M, 1C, and 1K is irradiated with the exposure beam, Bm, emitted from a semiconductor laser according to the input color material gradation data. A surface of each of the photoreceptors 11 of the image forming units 1Y, 1M, 1C, and 1K is charged by the charger 12, and then scanned and exposed by the laser exposure machine 13, thereby forming an electrostatic latent image. By each of the image forming units 1Y, 1M, 1C, and 1K, the formed electrostatic latent image is developed as a toner image of each of the colors Y, M, C, and K.

In the primary transfer section 10 in which the photoreceptor 11 and the intermediate transfer belt 15 come into contact with each other, the toner images formed on the photoreceptors 11 of the image forming units 1Y, 1M, 1C, and 1K are transferred to the intermediate transfer belt 15. More specifically, in the primary transfer section 10, a voltage (primary transfer bias) with a polarity opposite to the charging polarity (negative polarity) of the toner is applied to the substrate of the intermediate transfer belt 15 by the primary transfer roll 16, and the toner images are sequentially overlapped on the surface of the intermediate transfer belt 15 and subjected to primary transfer.

After the toner images are sequentially primarily transferred onto the surface of the intermediate transfer belt 15, the intermediate transfer belt 15 moves and the toner images are transported to the secondary transfer section 20. In a case where the toner images are transported to the secondary transfer section 20, in the transport unit, the paper feeding roll 51 rotates in accordance with the timing at which the toner images are transported to the secondary transfer section 20, and the paper K having a target size is fed from the paper storing section 50. The paper K fed from the paper feeding roll 51 is transported by the transport roll 52, passes through the transport guide 53, and reaches the secondary transfer section 20. Before reaching the secondary transfer section 20, the paper K is temporarily stopped, and a positioning roll (not shown in the drawing) rotates according to the movement timing of the intermediate transfer belt 15 holding the toner images so that the position of the paper K is aligned with the position of the toner images.

In the secondary transfer section 20, the secondary transfer roll 22 is pressed against the back roll 25 via the intermediate transfer belt 15. At this time, the paper K transported at the right timing is interposed between the intermediate transfer belt 15 and the secondary transfer roll 22. During the time, in a case where a voltage (secondary transfer bias) with the same polarity as the charging polarity (negative polarity) of the toner is applied from the power supply roll 26, a transfer electric field is formed between the secondary transfer roll 22 and the back roll 25. Furthermore, in the secondary transfer section 20 pressed by the secondary transfer roll 22 and the back roll 25, the unfixed toner images held on the intermediate transfer belt 15 are electrostatically transferred onto the paper K in a batch.

Thereafter, the paper K to which the toner images are electrostatically transferred is transported in a state of being released from the intermediate transfer belt 15 by the secondary transfer roll 22, and transported to the transport belt 55 provided on the downstream side of the secondary transfer roll 22 in the paper transport direction. In the transport belt 55, the paper K is transported to the fixing device 60 according to an optimum transport speed in the fixing device 60. The unfixed toner images on the paper K transported to the fixing device 60 are subjected to a fixing treatment with heat and pressure by the fixing device 60, and thus fixed on the paper K. Then, the paper K on which a fixed image is formed is transported to an ejected paper storing section (not shown in the drawing) provided in an output portion of the image forming apparatus.

Meanwhile, after the transfer to the paper K is completed, the residual toner remaining on the intermediate transfer belt 15 is transported to the cleaning section as the intermediate transfer belt 15 rotates, and is removed from the intermediate transfer belt 15 by the cleaning back roll 34 and the intermediate transfer belt-cleaning member 35.

[Examples]

Hereinafter, the exemplary embodiments of the present disclosure will be described in more detail with reference to Examples. It should be noted that the exemplary embodiments of the present disclosure are not limited to the following Examples. Furthermore, a term "part" is based on mass unless otherwise specified.

<Example 1>

- Manufacture of Elastic Layer -

A rubber composition was prepared by formulating the following components at the following proportions.

Chloroprene rubber (CR) "TSR-61" (manufactured by Tosoh Corporation): 35 parts
Epichlorohydrin rubber (ECO) "610" (manufactured by Daiso Co., Ltd.): 15 parts
Ethylene propylene diene rubber (EPDM) "EP33" (manufactured by JSR Corporation): 35 parts
Nitrile butadiene rubber (NBR) "DN211" (manufactured by Zeon Corporation): 15 parts
Sulfur (manufactured by Tsurumi Chemical Industry Co., Ltd.): 0.5 parts
Zinc oxide (manufactured by Kyodo Chemical Co., Ltd.): 5 parts
Vulcanizing accelerator "Noxeller M" (manufactured by Ouchi Shinko Chemical Industry Co., Ltd.): 1 part
Stearic acid: 0.5 parts
Conductivity imparting agent (carbon black) "#3030B" (manufactured by Mitsubishi Chemical Corporation): 23 parts

Next, the rubber composition was put into a Banbury mixer and kneaded, and then further kneaded with two rolls. The obtained kneaded product was molded into an endless belt shape by an extrusion molding machine equipped with a tube crosshead.

Next, the rubber composition molded into an endless belt shape was heated in a vulcanizer with pressurized steam (temperature: 126°C, pressure: 1.5 kg/cm$^2$) to form an elastic layer. The elastic layer was covered on the outer side of the metal-made tube (conductive substrate), and the surface was polished to obtain an endless belt-like elastic layer (diameter: 40 mm, width: 340 mm, thickness: 492 $\mu$m).

- Manufacture of Surface Layer -

34 parts by mass (amount of 6% by volume with respect to the surface layer) of SQ1 (PSS-octakis(dimethylsilyloxy) substitution product, manufactured by Sigma-Aldrich Co., LLC, R in Structural Formula A = dimethylsilyloxy) and 15 parts by mass of carbon black "FW200" (manufactured by Degussa AG) were added to 100 parts by mass of silicone-modified acrylic urethane (manufactured by Henkel Japan Co., Ltd.) to prepare a coating liquid for forming a surface layer.

Next, the coating liquid for forming a surface layer was spray-coated on a surface of the manufactured elastic layer, and heated and dried at 180°C for 30 minutes to form a surface layer (thickness: 8 $\mu$m). Thus, an electrophotographic

member having a diameter of 40 mm, a width of 340 mm, and a thickness of 500 $\mu$m was obtained.

<Example 2>

An electrophotographic member was obtained in the same manner as in Example 1, except that SQ1 was added to the surface layer so that a content thereof was 10% by volume.

<Example 3>

An electrophotographic member was obtained in the same manner as in Example 1, except that SQ1 was added to the surface layer so that a content thereof was 40% by volume.

<Example 4>

An electrophotographic member was obtained in the same manner as in Example 1, except that SQ1 was added to the surface layer so that a content thereof was 60% by volume.

<Example 5>

An electrophotographic member was obtained in the same manner as in Example 1, except that the binder resin was changed to a polyimide resin and SQ1 was added to the surface layer so that a content thereof was 30% by volume.

<Example 6>

An electrophotographic member was obtained in the same manner as in Example 3, except that SQ1 was changed to SQ2 (Tospearl 120 (polymethyl silsesquioxane), manufactured by Momentive Performance Materials Inc., R in Structural Formula A = methyl).

<Comparative Example 1>

An electrophotographic member was obtained in the same manner as in Example 2, except that SQ1 was changed to polydimethylsiloxane (PDMS: SHARILENE R200) (manufactured by Shin-Etsu Chemical Co., Ltd.).

<Comparative Example 2>

An electrophotographic member was obtained in the same manner as in Example 1, except that SQ1 was added to the surface layer so that a content thereof was 2% by volume.

<Comparative Example 3>

An electrophotographic member was obtained in the same manner as in Example 1, except that SQ1 was added to the surface layer so that a content thereof was 70% by volume.

<Comparative Example 4>

An electrophotographic member was obtained in the same manner as in Example 2, except that SQ1 was changed to SQ3 (Tospearl 130 (polymethyl silsesquioxane), manufactured by Momentive Performance Materials Inc., R in Structural Formula A = methyl).

<Evaluation>

- Surface Free Energy -

The surface free energy of the surface layers of the electrophotographic members obtained in Examples and Comparative Examples was measured according to the above-mentioned method. The results are shown in Table 1.

- Volume-Average Particle Diameter -

A volume-average particle diameter of the silicone compound in the surface layers of the electrophotographic members obtained in Examples and Comparative Examples was measured according to the above-mentioned method. The results are shown in Table 1.

- Dynamic Frictional Force -

A sheet piece including the surface layer, cut out to a thickness of 1 mm, from the electrophotographic members obtained in Examples and Comparative Examples, was used, and dynamic frictional forces of the surface layer before and after a corona treatment at a current of 100 μA, a temperature of 22°C, a relative humidity of 55% RH, and a total discharge power of 0.72 kW were measured using a portable friction meter (manufactured by HEIDON (Shinto Scientific Co., Ltd.)) in accordance with JIS K7125: 1999. The results are shown in Table 1.

- Cleanability -

The electrophotographic members obtained in Examples and Comparative Examples were applied to a secondary transfer roll of an ApeosPort VII C6688 (manufactured by Fujifilm Business Innovation Corp.)-modified machine, and after passing 10,000 sheets of a black (K) 100% solid image on A3 plain paper, the back surface of the 10,001st output paper was visually observed to evaluate the cleanability. The evaluation was performed according to the following standards. The results are shown in Table 1.

A: No dirt is adhered
B: Dirt is adhered and the adhesion area is 5% or more and less than 10%
C: Dirt is adhered and the adhesion area is 10% or more

[Table 1]

| | Binder resin | Additive | Content of additive [% by volume] | Average particle diameter [$\mu$ m] | Surface free energy [mJ/m$^2$] | Dynamic friction coefficient A (before surface treatment) | Dynamic friction coefficient B (after surface treatment) | B - A | Cleanability (initial stage) | Cleanability (after use) |
|---|---|---|---|---|---|---|---|---|---|---|
| Example 1 | Urethane resin | SQ1 | 6 | 0.003 | 38 | 0.28 | 0.29 | 0.01 | A | B |
| Example 2 | Urethane resin | SQ1 | 10 | 0.003 | 35 | 0.25 | 0.25 | 0 | A | A |
| Example 3 | Urethane resin | SQ1 | 40 | 0.003 | 30 | 0.22 | 0.22 | 0 | A | A |
| Example 4 | Urethane resin | SQ1 | 60 | 0.003 | 28 | 0.16 | 0.17 | 0.01 | A | B |
| Example 5 | Polyimide resin | SQ1 | 30 | 0.003 | 35 | 0.28 | 0.29 | 0.01 | A | B |
| Example 6 | Urethane resin | SQ2 | 40 | 2 | 35 | 0.25 | 0.25 | 0 | A | A |
| Comparative Example 1 | Urethane resin | PDMS | 10 | 2 | 38 | 0.25 | 0.35 | 0.10 | A | C |
| Comparative Example 2 | Urethane resin | SQ1 | 2 | 0.003 | 46 | 0.36 | 0.36 | 0 | C | C |
| Comparative Example 3 | Urethane resin | SQ1 | 70 | 0.003 | 28 | 0.14 | 0.14 | 0 | C | C |
| Comparative Example 4 | Urethane resin | SQ3 | 10 | 3 | 46 | 0.36 | 0.36 | 0 | C | C |

As shown in Table 1, it was found that the electrophotographic members of Inventive Examples have higher maintainability of cleanability than the electrophotographic members of Comparative Examples.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

Brief Description of the Reference Symbols

1Y, 1M, 1C, 1K: image forming unit
10: primary transfer section
11: photoreceptor
12: charger
13: laser exposure machine
14: developer
15: intermediate transfer belt
16: primary transfer roll
17: photoreceptor cleaner
20: secondary transfer section
22: secondary transfer roll
22A: secondary transfer roll-cleaning member
25: back roll
26: power supply roll
31: driving roll
32: support roll
33: tension applying roll
34: cleaning back roll
35: intermediate transfer belt-cleaning member
40: control section
42: reference sensor
43: image density sensor
50: paper storing section
51: paper feeding roll
52: transport roll
53: transport guide
55: transport belt
56: fixing inlet guide
60: fixing device
70: image forming apparatus
100: electrophotographic member
110: conductive substrate
120: roll body
122: elastic layer
124: intermediate layer
126: surface layer

**Claims**

1. An electrophotographic member comprising:

   a surface layer; and
   an elastic layer,

wherein in a case where a dynamic friction coefficient of the surface layer is denoted by (A) and a dynamic friction coefficient of the surface layer after subjecting the surface layer to a corona treatment at a current of 100 $\mu$A, a temperature of 22°C, a relative humidity of 55% RH, and a total discharge power of 0.72 kW is denoted by (B) in accordance with JIS K7125: 1999, (A) is 0.15 or more and 0.35 or less, and (B - A) is 0.05 or less,
the electrophotographic member **characterized in that**
the surface layer includes a silicone compound,
the silicone compound includes a compound having Structure A represented by Formula: $[RSiO_{1.5}]_n$, provided that in the formula, R represents an organic group and n represents an integer of 2 or more
at least one R among a plurality of R's present in Structure A is a group including an alkyl group, and
a volume-average particle diameter of the silicone compound is 2.5 $\mu$m or less measured in accordance with a method outlined in the description.

2. The electrophotographic member according to claim 1,
wherein a surface free energy of the surface layer is 45 mJ/m$^2$ or less measured in accordance with a method outlined in the description in.

3. The electrophotographic member according to claim 1 or 2,
wherein a content of the silicone compound is 3% by volume or more and 60% by volume or less with respect to the surface layer.

4. The electrophotographic member according to claim 3,
wherein the content of the silicone compound is 10% by volume or more and 40% by volume or less with respect to the surface layer.

5. The electrophotographic member according to claim 1,
wherein the volume-average particle diameter of the silicone compound is 1 $\mu$m or less.

6. The electrophotographic member according to any one of claims 1 to 5,
wherein the surface layer includes a urethane resin as a binder resin.

7. A transfer device (10) comprising:
the electrophotographic member according to any one of claims 1 to 6.

8. An image forming apparatus (70) comprising:

an image holder (11);
a charging device (12) that charges a surface of the image holder (11);
an electrostatic latent image forming device (13) that forms an electrostatic latent image on the charged surface of the image holder (11);
a developing device (14) that accommodates a developer including a toner and develops the electrostatic latent image formed on the surface of the image holder (11) with the developer to form a toner image;
the transfer device (10) according to claim 7 that transfers the toner image onto a surface of a recording medium (K); and
a fixing device (60) that fixes the toner image on the surface of the recording medium (K).

**Patentansprüche**

1. Elektrophotographisches Element, umfassend:

eine Oberflächenschicht; und
eine elastische Schicht,
wobei in einem Fall, in dem ein dynamischer Reibungskoeffizient der Oberflächenschicht als (A) bezeichnet wird und ein dynamischer Reibungskoeffizient der Oberflächenschicht nach Unterziehen der Oberflächenschicht einer Coronabehandlung bei einem Strom von 100 $\mu$A, einer Temperatur von 22 °C, einer relativen Luftfeuchtigkeit von 55 % RH und einer Gesamtladungsleistung von 0,72 kW in Übereinstimmung mit JIS K7125:1999 als (B) bezeichnet wird, (A) 0,15 oder mehr und 0,35 oder weniger beträgt und (B - A) 0,05 oder weniger beträgt,

wobei das elektrophotographische Element **dadurch gekennzeichnet ist, dass**
die Oberflächenschicht eine Silikonverbindung enthält,
die Silikonverbindung eine Verbindung, die eine Struktur A, die durch Formel: $[RSiO_{1,5}]_n$ dargestellt wird, aufweist, enthält, vorausgesetzt, dass in der Formel R eine organische Gruppe darstellt und n eine ganze Zahl von 2 oder mehr darstellt,
mindestens ein R unter mehreren R, die in der Struktur A vorhanden sind, eine Gruppe, die eine Alkylgruppe enthält, ist, und
ein volumenmittlerer Teilchendurchmesser der Silikonverbindung 2,5 $\mu$m oder weniger beträgt, gemessen in Übereinstimmung mit einem in der Beschreibung dargestellten Verfahren.

2. Elektrophotographisches Element nach Anspruch 1,
wobei eine freie Oberflächenenergie der Oberflächenschicht 45 mJ/m$^2$ oder weniger beträgt, gemessen in Übereinstimmung mit einem in der Beschreibung dargestellten Verfahren.

3. Elektrophotographisches Element nach Anspruch 1 oder 2,
wobei ein Gehalt der Silikonverbindung 3 Vol.-% oder mehr und 60 Vol.-% oder weniger in Bezug auf die Oberflächenschicht beträgt.

4. Elektrophotographisches Element nach Anspruch 3,
wobei der Gehalt der Silikonverbindung 10 Vol.-% oder mehr und 40 Vol.-% oder weniger in Bezug auf die Oberflächenschicht beträgt.

5. Elektrophotographisches Element nach Anspruch 1,
wobei der volumenmittlere Teilchendurchmesser der Silikonverbindung 1 $\mu$m oder weniger beträgt.

6. Elektrophotographisches Element nach einem der Ansprüche 1 bis 5,
wobei die Oberflächenschicht ein Urethanharz als ein Bindemittel enthält.

7. Übertragungsvorrichtung (10), umfassend:
das elektrophotographische Element nach einem der Ansprüche 1 bis 6.

8. Bilderzeugungsvorrichtung (70), umfassend:

einen Bildhalter (11);
eine Ladevorrichtung (12), die eine Oberfläche des Bildhalters (11) lädt;
eine Erzeugungsvorrichtung (13) für elektrostatisches Latentbild, die ein elektrostatisches Latentbild auf der geladenen Oberfläche des Bildhalters (11) erzeugt;
eine Entwicklungsvorrichtung (14), die einen Entwickler, der einen Toner enthält, aufnimmt und das auf der Oberfläche des Bildhalters (11) erzeugte elektrostatische Latentbild mit dem Entwickler entwickelt, um ein Tonerbild zu erzeugen;
die Übertragungsvorrichtung (10) nach Anspruch 7, die das Tonerbild auf eine Oberfläche eines Aufzeichnungsmediums (K) überträgt; und
eine Fixiervorrichtung (60), die das Tonerbild auf der Oberfläche des Aufzeichnungsmediums (K) fixiert.

**Revendications**

1. Élément électrophotographique comprenant :

une couche de surface ; et
une couche élastique,
dans lequel dans un cas où un coefficient de frottement dynamique de la couche de surface est désigné par (A) et un coefficient de frottement dynamique de la couche de surface après avoir soumis la couche de surface à un traitement corona à un courant de 100 $\mu$A, une température de 22 °C, une humidité relative de 55 % RH et une puissance de décharge totale de 0,72 kW est désigné par (B) conformément à la norme JIS K7125:1999, (A) est de 0,15 ou plus et de 0,35 ou moins, et (B - A) est de 0,05 ou moins,
le élément électrophotographique **caractérisé en ce que**
la couche de surface inclut un composé de silicone,

le composé de silicone inclut un composé ayant une structure A représentée par Formule : $[RSiO_{1,5}]_n$, étant entendu que, dans la formule, R représente un groupe organique et n représente un entier de 2 ou plus, au moins un R parmi une pluralité de R présents dans la structure A est un groupe incluant un groupe alkyle, et un diamètre moyen de particules en volume du composé de silicone est de 2,5 $\mu$m ou moins, mesuré conformément à un procédé décrit dans la description.

2. Élément électrophotographique selon la revendication **1,**
   dans lequel une énergie libre de surface de la couche de surface est de 45 mJ/m$^2$ ou moins, mesurée conformément à un procédé décrit dans la description.

3. Élément électrophotographique selon la revendication 1 ou la revendication 2,
   dans lequel un teneur en composé de silicone est de 3 % en volume ou plus et de 60 % en volume ou moins par rapport à la couche de surface.

4. Élément électrophotographique selon la revendication 3,
   dans lequel le teneur en composé de silicone est de 10 % en volume ou plus et de 40 % en volume ou moins par rapport à la couche de surface.

5. Élément électrophotographique selon la revendication 1,
   dans lequel le diamètre moyen de particules en volume du composé de silicone est de 1 $\mu$m ou moins.

6. Élément électrophotographique selon l'une quelconque des revendications 1 à 5,
   dans lequel la couche de surface inclut une résine d'uréthane en tant que résine liante.

7. Dispositif de transfert (10) comprenant :
   l'élément électrophotographique selon l'une quelconque des revendications 1 à 6.

8. Appareil de formation d'images (70) comprenant :

   un support d'images (11) ;
   un dispositif de charge (12) qui charge une surface du support d'images (11) ;
   un dispositif de formation d'images latentes électrostatiques (13) qui forme une image latente électrostatique sur la surface chargée du support d'images (11) ;
   un dispositif de développement (14) qui contient un révélateur incluant un toner et qui développe l'image latente électrostatique formée sur la surface du support d'images (11) avec le révélateur pour former une image de toner ;
   le dispositif de transfert (10) selon la revendication 7 qui transfère l'image de toner sur une surface d'un support d'enregistrement (K) ; et
   un dispositif de fixation (60) qui fixe l'image de toner sur la surface du support d'enregistrement (K).

# FIG. 1

EP 4 589 388 B1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020056928 A

- WO 2012058178 A1